(19) **Europäisches Patentamt / European Patent Office / Office européen des brevets**

(11) **EP 4 596 625 A1**

(12) # EUROPEAN PATENT APPLICATION
published in accordance with Art. 153(4) EPC

(43) Date of publication:
06.08.2025 Bulletin 2025/32

(21) Application number: 23871618.7

(22) Date of filing: 25.08.2023

(51) International Patent Classification (IPC):
*C08L 67/02* (2006.01)    *C08K 3/20* (2006.01)
*C08K 7/14* (2006.01)

(52) Cooperative Patent Classification (CPC):
C08K 3/20; C08K 7/14; C08L 67/02

(86) International application number:
PCT/JP2023/030730

(87) International publication number:
WO 2024/070377 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 JP 2022155880

(71) Applicant: TOYOBO MC Corporation
Osaka 530-0001 (JP)

(72) Inventor: HORIGUCHI, Satoru
Otsu-shi, Shiga 520-0292 (JP)

(74) Representative: Vossius & Partner
Patentanwälte Rechtsanwälte mbB
Siebertstrasse 3
81675 München (DE)

(54) **RESIN COMPOSITION FOR LASER MARKING**

(57) The present invention provides a resin composition for laser marking which has high strength and high rigidity, but still gives a character, a symbol, and the like with sharp contrast, and has excellent laser marking properties on an electrical or electronic part, a mechanical part, an automobile part, and the like. A resin composition for laser marking which contains 20 to 80 mass% of a polyester resin (A), 10 to 50 mass% of glass fibers (B), and 0.1 to 10 mass% of potassium titanate (C). The polyester resin (A) is preferably polybutylene terephthalate or polyethylene terephthalate.

EP 4 596 625 A1

**Description**

Technical Field

The present invention relates to a resin composition for laser marking which has excellent mechanical strength and laser marking properties.

Background Art

Polyester resins have excellent mechanical properties and electrical properties, and other excellent physical and chemical properties and have good processability, and are therefore used as engineering plastic in a wide range of applications such as an automobile and an electrical or electronic part. Product identification marking is widely used in industrial fields. The product identification marking is used to put on a resin product, for example, a production date, an expiration date, a company logo, a serial number, or a model number. This marking is achieved by, for example, printing, hot embossing, other embossing, or a method of using attachment of a label, and particularly for a resin product, the use of a laser enables very fast high-resolution contactless marking. This method enables, for example, a graphic print such as a barcode, or a small character to be put at high speed even on a non-flat surface. Further, this method causes no concern about peeling or deletion that may occur in labeling or printing. Therefore, in the identification marking particularly on a thermoplastic resin, not only appropriate mechanical, thermal, electrical, and chemical properties but also laser marking properties are increasingly required.

It is generally known that a thermoplastic resin product can absorb energy from laser light applied and convert this energy into heat, and thereby can induce a color-changing reaction (that is, marking) on a material.

However, it has so far been actually difficult to perform marking on many thermoplastic resins with a laser. For example, a $CO_2$ laser that discharges 10.6-$\mu$m-region infrared light is very weak even with high-powered output, and therefore it has been difficult to achieve readable marking with the $CO_2$ laser. Embossing performed on a polyurethane elastomer and a polyether ester elastomer hardly creates contrast with the surrounding, and therefore has not similarly achieved readable marking.

In order to perform laser marking on a thermoplastic resin, the resin needs to absorb laser light. Laser light absorption properties depend on the chemical structure of the resin composition or the wavelength of the laser used. When the ability unique to a polymer constituting the thermoplastic resin is insufficient, an additive, such as a laser light absorber, is generally added so as to improve the laser light absorption properties.

For example, Patent Document 1 proposes a polyamide resin composition for laser marking which contains a halogen-containing organic compound and an antimony compound. However, the antimony compound is toxic and is suspected of being cancer-causing. Therefore, one containing no antimony compound is required.

On the other hand, Patent Document 2 proposes a safe laser marking material containing no toxic antimony but having instead titanium dioxide and a reducing agent blended therein. However, a resin composition actually having the laser marking material of Patent Document 2 blended therein has sometimes degraded the mechanical characteristics of the resin composition.

Prior Art Documents

Patent Documents

Patent Document 1: Japanese Patent Application Laid-Open (JP-A) No. 2007-98939
Patent Document 2: Japanese Patent Application Laid-Open (JP-A) No. 1065/99

Disclosure of the Invention

Problem that the Invention is to Solve

The present invention has been made in view of the present circumstances of conventional techniques described above. An object of the present invention is to provide a resin composition for laser marking which has high strength and high rigidity, but still gives a character, a symbol, and the like with sharp contrast, and has excellent laser marking properties on an electrical or electronic part, a mechanical part, an automobile part, and the like.

Means for Solving the Problem

The inventors of the present invention have earnestly conducted a study so as to achieve the object, and, as a result, found that a reason why the resin composition having the laser marking material of Patent Document 2 blended therein exhibits poor mechanical characteristics is that glass fibers usually blended in the resin composition for reinforcement are damaged by titanium dioxide and the mechanical characteristics such as bending strength is lowered. In addition, since high flame retardancy is required for applications such as an electrical or electronic part, a mechanical part, and an automobile part, the resin composition sometimes has a flame retardant blended therein. The inventors of the present invention have found that when a flame retardant, particularly a non-halogen-based flame retardant is blended, the resin composition exhibits further lower mechanical characteristics by the blending of the flame retardant, compared with the inherent low mechanical characteristics. However, the inventors of the present invention have found that by using, as a laser marking material, a specific amount of potassium titanate instead of the titanium dioxide and the reducing agent described in Patent Document 2, it is possible to obtain a resin composition for laser marking which maintains high mechanical characteristics even when the polyester resin composition contains glass fibers and a non-halogen-based flame retardant, and which has sharp-contrast laser marking properties. The present invention has thus been completed.

Specifically, the present invention includes the following configurations (1) to (4).

(1) A resin composition for laser marking which contains 20 to 80 mass% of a polyester resin (A), 10 to 50 mass% of glass fibers (B), and 0.1 to 10 mass% of potassium titanate (C).

(2) The resin composition for laser marking according to (1), wherein the potassium titanate (C) is fibrous potassium titanate.

(3) The resin composition for laser marking according to (1) or (2), wherein the resin composition for laser marking further contains 1 to 30 mass% of a non-halogen-based flame retardant (D), and has a bending strength of 165 MPa or more.

(4) The resin composition for laser marking according to (1) or (2), wherein the polyester resin (A) is polybutylene terephthalate or polyethylene terephthalate.

Effects of the Invention

The present invention can provide a resin composition for laser marking which has high strength and high rigidity, but still has excellent laser marking properties. The resin composition of the present invention exhibits only a small decrease in mechanical characteristics even when the resin composition has a non-halogen-based flame retardant blended therein. Further, the resin composition of the present invention does not necessarily contain a colorant such as carbon black, and therefore can be used for a wide range of color tones. Mode for Carrying Out the Invention

The resin composition for laser marking of the present invention is characterized in that a resin composition obtained by blending glass fibers (B) for reinforcement in a polyester resin (A) has blended therein a specific amount of potassium titanate (C) as a laser marking material.

As to the polyester resin (A), a polyester resin containing a dicarboxylic acid component and a diol component as constituent components is preferred. As to the dicarboxylic acid component, one containing an aromatic dicarboxylic acid as a main component is preferred. Here, the main component refers to a component contained usually by 70 mol% or more, preferably 80 mol% or more, more preferably 90 mol% or more, and particularly preferably 95 mol% or more with respect to all the dicarboxylic acid units. Other than the aromatic dicarboxylic acid, an aliphatic dicarboxylic acid is usable.

Examples of the aromatic dicarboxylic acid include aromatic dicarboxylic acids such as terephthalic acid, isophthalic acid, orthophthalic acid, 2,6-naphthalenedicarboxylic acid, 1,3-naphthalenedicarboxylic acid, 1,4-naphthalenedicarboxylic acid, 1,5-naphthalenedicarboxylic acid, 2,7-naphthalenedicarboxylic acid, diphenyl-4,4'-dicarboxylic acid, 4,4'-biphenyletherdicarboxylic acid, 1,2-bis(phenoxy)ethane-p,p'-dicarboxylic acid, and anthracenedicarboxylic acid. Among these examples, terephthalic acid, isophthalic acid, and 2,6-naphthalenedicarboxylic acid are preferred.

Specific examples of the aliphatic dicarboxylic acid include chain or alicyclic dicarboxylic acids usually having 2 or more and 40 or less carbon atoms, such as oxalic acid, succinic acid, glutaric acid, adipic acid, sebacic acid, dodecanedioic acid, dimer acid, and cyclohexanedicarboxylic acid. The dicarboxylic acid components described above can be used singly or in mixture of two or more thereof. Other than the dicarboxylic acid component and the diol component, a hydroxycarboxylic acid component or a lactone component may be copolymerized. The usage amount of the hydroxycarboxylic acid component or the lactone component is preferably 30 mol% or less, more preferably 20 mol% or less, and further preferably 10 mol% or less with respect to all the monomer components.

Examples of the diol component include ethylene glycol, propylene glycol, 1,3-propanediol, 1,4-butanediol, 1,5-pentanediol, neopentyl glycol, 1,6-hexanediol, 3-methyl-1,5-pentanediol, 2-methyl-1,5-pentanediol, 2,2-diethyl-1,3-propanediol, 2-butyl-2-ethyl-1,3-propanediol, 1,9-nonanediol, 1,10-decanediol, 1,4-cyclohexanedimethanol, 1,3-cyclohexanedimethanol, and 1,2-cyclohexanedimethanol. Among these examples, ethylene glycol, 1,3-propanediol, and 1,4-butanediol are preferred.

Preferable examples of the polyester resin (A) include polybutylene terephthalate, polyethylene terephthalate, polytrimethylene terephthalate, polybutylene naphthalate, and polyethylene naphthalate. The polyester resin (A) preferably has an intrinsic viscosity (IV) of 0.36 to 1.60 dl/g, wherein the intrinsic viscosity (IV) is measured at 30°C, using a ubbelohde viscometer tube, in a mixed solvent of phenol/tetrachloroethane (mass ratio 6/4). The intrinsic viscosity (IV) is more preferably 0.52 to 1.25 dl/g, further preferably 0.58 to 1.12 dl/g, and particularly preferably 0.62 to 1.02 dl/g.

The content of the polyester resin (A) is 20 to 80 mass% in 100 mass% of the resin composition. It is preferably 25 to 75 mass%, more preferably 27 to 73 mass%, and further preferably 30 to 70 mass%, in 100 mass% of the resin composition.

Examples of the glass fibers (B) include filament fibers obtained by melt spinning of glass such as E-glass (Electrical glass), C-glass (Chemical glass), A-glass (Alkali glass), S-glass (High strength glass), and alkali-resistant glass. As to the glass fibers (B), a general-purpose product having an average fiber diameter of about 4 to 50 $\mu$m and having a cut length of about 3 to 6 mm can be used. As to the sectional shape of the glass fibers (B), glass fibers having a circular section or a non-circular section can be used. The glass fibers having a non-circular section include fibers having a substantial ellipse shape, a substantial oval shape, or a substantial cocoon shape at the section perpendicular to the fiber-length direction, and preferably have a flatness of 1.3 to 8. Here, the flatness is a ratio major axis/minor axis, wherein the major axis and the minor axis are respectively the length of a long side of a minimum-area rectangle imaginarily circumscribed around the section perpendicular to the longitudinal direction of a glass fiber, and the length of a short side of the rectangle. Glass fibers having, as the thickness, for example, a minor axis of 1 to 20 $\mu$m and a major axis of about 2 to 100 $\mu$m can be used. One of these types of glass fibers may be used singly, or two or more thereof may be used in combination.

The glass fibers (B) are preferably pretreated with a coupling agent such as an organic silane-based compound, an organic titanium-based compound, an organic borane-based compound, and an epoxy-based compound. The resin composition having blended therein glass fibers treated with a coupling agent can give a molded article having excellent mechanical characteristics and excellent appearance properties. When the glass fibers have not been treated with a coupling agent, the resin composition can be used after a coupling agent is added later.

The glass fibers (B) have an average fiber diameter of preferably 3 to 15 $\mu$m, more preferably 3 to 10 $\mu$m, and further preferably 3 to 8 $\mu$m. The fiber diameter of the glass fibers is a diameter at a section perpendicular to the longitudinal direction of the glass fibers. When the section has the maximum diameter and the minimum diameter, the fiber diameter of the glass fibers means the maximum diameter. The glass fibers having an average fiber diameter in the above range improve the adhesiveness between the polyester resin and the glass fibers, and thus improves the mechanical characteristics of the resin composition.

The content of the glass fibers (B) is 10 to 50 mass% in 100 mass% of the resin composition. It is preferably 13 to 48 mass%, more preferably 15 to 45 mass%, and further preferably 18 to 42 mass%, in 100 mass% of the resin composition.

The potassium titanate (C) is potassium titanate represented by $K_2O \cdot nTiO_2$ (n is an integer selected from 1, 2, 4, 6, or 8). Particularly, potassium titanate represented by $K_2O \cdot 6TiO_2$ (n = 6) enables sharp high-visibility laser marking and is therefore preferred. Particularly, potassium titanate having a tunnel structure and containing less free potassium is preferred. The potassium titanate (C) may contain crystal water. The potassium titanate (C) may be used after surface-treated with a coupling agent based on silane, titanium, aluminum, or the like.

The potassium titanate (C) may be either fibrous or particulate, and both shapes can be used in combination, but the potassium titanate (C) that is fibrous is preferred. When being fibrous, the potassium titanate (C) has an average fiber diameter of preferably 0.05 to 1 $\mu$m, more preferably 0.05 to 0.9$\mu$m, and further preferably 0.05 to 0.8 $\mu$m. When the potassium titanate (C) has an average fiber diameter of less than the above range, the handleability is deteriorated. In addition, such potassium titanate easily contacts with the glass fibers, and thus the mechanical characteristics may possibly be lowered. When the potassium titanate (C) has an average fiber diameter of more than the above range, the laser marking properties may possibly be lowered. The average fiber length is preferably 1 to 50 $\mu$m, more preferably 2 to 40 $\mu$m, and further preferably 3 to 30 $\mu$m, in terms of easiness of obtaining a commercially available product.

When being particulate, the potassium titanate (C) has an average particle diameter of preferably 0.5 to 15 $\mu$m, more preferably 1 to 13 $\mu$m, and further preferably 1.5 to 10 $\mu$m. When the potassium titanate (C) has an average particle diameter of less than the above range, the handleability is deteriorated. In addition, such potassium titanate easily contacts with the glass fibers, and thus the mechanical characteristics may possibly be lowered. When the potassium titanate (C) has an average particle diameter of more than the above range, the laser marking properties may possibly be lowered.

The content of the potassium titanate (C) is necessary to be 0.1 to 10 mass% in 100 mass% of the resin composition. It is preferably 0.2 to 8 mass% and more preferably 0.3 to 5 mass%, in 100 mass% of the resin composition. When the content is less than the above range, the expression of marking is poor. On the other hand, when the potassium titanate (C) is contained beyond the range, not only the improvement of marking properties is not expected, but also the mechanical characteristics of the resin composition may possibly be lowered.

When flame retardancy is intended to be imparted to the resin composition for laser marking of the present invention, a non-halogen-based flame retardant (D) can be contained in the resin composition. As to the non-halogen-based flame retardant (D), for example, a phosphorus-based flame retardant can be used. Examples of the phosphorus-based flame retardant include a red phosphorus-based compound, a metal diphosphinate, a reaction product formed of melamine and phosphoric acid, a phosphazene compound, and a phosphinic acid derivative. These can be used singly or in combination of a plurality thereof.

In the resin composition for laser marking of the present invention, a non-phosphorus-based flame retardant may be used as the non-halogen-based flame retardant. A phosphorus-based flame retardant and a non-phosphorus-based flame retardant may be used in combination. Examples of the non-phosphorus-based flame retardant include a nitrogen-based flame retardant, a silicon-based flame retardant, a metal hydroxide, and a metal boroxide.

The content of the non-halogen-based flame retardant (D) is preferably 1 to 30 mass%, more preferably 3 to 27 mass%, and further preferably 5 to 24 mass%, in 100 mass% of the resin composition. When the content is less than the above range, target high-level flame retardancy cannot be obtained. When the content is more than the above range, the physical properties may be lowered and a problem is likely to be caused. Excessive content is not economically preferred either.

The resin composition for laser marking of the present invention preferably further contains a stabilizer. Examples of the stabilizer include organic antioxidants such as a hindered phenolic antioxidant, a sulfur-based antioxidant, and a phosphorus-based antioxidant, a thermal stabilizer, a photostabilizer based on a hindered amine, benzophenone, imidazole, or the like, an ultraviolet absorber, a metal inactivator, a copper compound, and a halogenated alkali metal compound. Among these examples, a copper compound is preferred. Only one of the stabilizers may be used singly, or some thereof may be used in combination. The content of the stabilizer is preferably 5 mass% or less, more preferably 4 mass% or less, and further preferably 3 mass% or less, in 100 mass% of the resin composition.

Examples of the copper compound usable as the stabilizer include copper(I) chloride, copper(I) bromide, copper(I) iodide, copper(II) chloride, copper(II) bromide, copper(II) iodide, copper(II) phosphate, copper(II) pyrophosphate, copper sulfide, copper nitrate, and copper salts of organic carboxylic acids, such as copper acetate. Only one of the copper compounds may be used singly, or some thereof may be used in combination.

The resin composition for laser marking of the present invention can further contain an olefin-based compound for the purpose of modifying the characteristics such as impact resistance and flexibility. The olefin-based compound preferably has a carboxylic acid group and/or a carboxylic anhydride group. Examples of such an olefin-based compound include a modified polyolefin and a modified styrene-based copolymer. The content of the olefin-based compound is preferably 3 mass% or more, and more preferably 6 mass% or more, in 100 mass% of the resin composition. The upper limit of the content of the olefin-based compound is preferably 20 mass% or less, more preferably 15 mass% or less, and further preferably 10 mass% or less.

The resin composition for laser marking of the present invention can contain a known reinforcing material other than the glass fibers (B) described above. Here, the reinforcing material means a substance that can increase the mechanical properties, specifically the mechanical properties of a molded article obtained through molding of pellets. The shape of the reinforcing material is not particularly limited, and may be, for example, fibrous or particulate. The type of the reinforcing material is not particularly limited, and examples include acicular wollastonite, mica, talc, unbaked clay, whisker (other than whisker of potassium titanate), carbon fibers, ceramic fibers, silica, alumina, kaolin, quartz, powdery glass (milled fibers), graphite, glass flakes, calcium carbonate, barium sulfate, carbon black, and a metal powder. Only one of the reinforcing materials may be used singly, or some thereof may be used in combination. The content of the reinforcing material other than the glass fibers (B) is preferably 20 mass% or less, in 100 mass% of the resin composition.

The resin composition for laser marking of the present invention can further contain an additive (E) such as a mold-releasing agent, a crystal nucleating agent, a lubricant, a flame retardant, an antistatic agent, a pigment, and a dye. One of these additives (E) or any combination thereof can be selected and used. Examples of the mold-releasing agent include a long-chain fatty acid and an ester or metal salt thereof, an amide-based compound, polyethylene wax, silicone, and polyethylene oxide. The content of the additive (E) is preferably 0.01 mass% or more, and more preferably 0.05 mass% or more, in 100 mass% of the resin composition. The upper limit of the content of the additive (E) is preferably 5.0 mass% or less, more preferably 3.0 mass% or less, and further preferably 1.0 mass% or less, in 100 mass% of the resin composition.

In the resin composition for laser marking of the present invention, the total amount of the components (A), (B), (C), and (D) preferably accounts for 90 mass% or more, and more preferably accounts for 95mass% or more of the resin composition. The components (A), (B), and (C) are essential components, whereas the component (D) is an optional component.

The resin composition for laser marking of the present invention can maintain high mechanical characteristics even when having the non-halogen-based flame retardant (D) blended therein. Specifically, the resin composition for laser marking of the present invention can achieve a bending strength of as high as 165 MPa or more even when further containing 1 to 30 mass% of the non-halogen-based flame retardant (D). Therefore, the resin composition for laser marking of the present invention can particularly suitably be used in applications, such as an electrical or electronic part, a mechanical part, and an automobile part, in which both high flame retardancy and high mechanical characteristics are required to be achieved.

The method for producing the resin composition for laser marking of the present invention is not particularly limited, and for example, a melt-kneading extrusion method can be employed in which the blending amount of the components in the present invention can accurately be controlled within the above prescribed range. In this method, a single-screw extruder or a twin-screw extruder is preferably used.

When the blending resin pellets to be charged through a hopper of an extruder have a great difference in shape, apparent specific gravity, coefficient of friction, and the like from each other, the polyester resin (A) and the other components are preferably mixed in advance and charged through the hopper of the extruder, while the glass fibers (B) and the potassium titanate (C) are charged by side feeding.

A molded article made from the resin composition for laser marking of the present invention, or a molded article made from a resin, ceramic, a metal, or the like and covered with the resin composition for laser marking of the present invention by printing, application, multiple molding, or the like enables easy and sharp marking only by applying a laser beam to a desired position of the molded article. Examples of a way of marking a desired shape include a method of making the laser light into a spot with an appropriate size and scanning a surface of an object, and a method of masking the laser light so as to form the laser light into a desired shape, and applying the laser light with the desired shape to a surface of an object. Examples of the laser to be used include a carbon dioxide gas laser, a ruby laser, a semiconductor laser, an argon laser, an excimer laser, and a YAG laser. Among these, a Nd:YAG laser is preferred and a scan-type Nd:YAG laser is particularly preferred.

Examples

The present invention will be more specifically illustrated by way of Examples although the present invention is never limited to those Examples. Incidentally, each of the characteristics and properties mentioned in Examples and Comparative Examples below was measured by the following test methods.

(1) Intrinsic viscosity (IV) of the polyester resin:

A resin sample in an amount of 0.1 g was dissolved in 25 ml of a mixed solvent of phenol/tetrachloroethane (mass ratio 6/4), and the intrinsic viscosity (IV) of the resin sample was measured at 30°C, using a ubbelohde viscometer tube. (Unit: dl/g)

(2) Bending strength:

The bending strength of the test pieces obtained through molding of the pellets of resin compositions obtained in the Examples and the Comparative Examples was measured in accordance with ISO-178.

(3) Laser marking properties ΔL:

The laser marking properties ΔL was measured by performing laser marking on the test pieces obtained through molding of the pellets of resin compositions obtained in the Examples and the Comparative Examples under the following marking conditions, and measuring a color difference ΔL between a marked portion and a ground portion by the following measuring method.

[Marking conditions]

Device: KEYENCE CORPORATION, 3-Axis UV laser marker MD-U1000C
Marking conditions: Laser power 20%; Scan speed 1000mm/s;
Frequency 40 kHz; Number of times of marking 1

[Measurement of ΔL]

A test was performed in accordance with JIS Z8722, using precision spectrophotometric colorimeter TC-1500SX manufactured by Tokyo Denshoku. co., Ltd., by measuring a marked portion L colored by the laser application and a ground portion L, and ΔL was derived from the following equation.

$$\Delta L = (\text{Marked portion } L) - (\text{Ground portion } L)$$

(4) Flammability test

The test pieces obtained through molding of the pellets of resin compositions obtained in the Examples and the Comparative Examples were evaluated for flammability in accordance with UL94. The thickness of the test pieces was set to 1.6 mm.

The raw materials used in the Examples and the Comparative Examples are as follows.

(A) Polyester resin

(A-1) : Polybutylene terephthalate resin (IV = 0.83 dl/g)
(A-2) : Polyethylene terephthalate resin (IV = 0.62 dl/g)

(B): Glass fibers

(B-1): "ECS03T-275H" (fiber diameter 10.5 $\mu$m, fiber length 3 mm) manufactured by Nippon Electric Glass Co., Ltd.
(B-2) : "CS 3DE-456" (fiber diameter 6.5 $\mu$m, fiber length 3 mm) manufactured by NITTO BOSEKI CO., LTD.

(C): Potassium titanate

(C-1) : "TISMO D" (fibrous, fiber diameter 0.5 $\mu$m, fiber length 15 $\mu$m) manufactured by Otsuka Chemical Co., Ltd.
(C-2) : "TIBREX RPN" (particulate, particle diameter 1.5 $\mu$m) manufactured by JFE Mineral & Alloy Company, Ltd.
(C-3) : "TIBREX Type-IIM" (particulate, particle diameter 7 $\mu$m) manufactured by JFE Mineral & Alloy Company, Ltd.
(C'): "PF691" (titanium oxide, particulate, particle diameter 0.2 $\mu$m) manufactured by ISHIHARA SANGYO KAISHA, LTD.

(D) Non-halogen-based flame retardant
(D-1) Aluminum phosphinate/zinc tin trioxide/aluminum phosphite = 77/3/20
(E) Other additive
(E-1) Magnesium stearate (mold-releasing agent): "NP-1500" manufactured by TANNAN KAGAKU KOGYO CO., LTD.

Examples 1 to 11 and Comparative Examples 1 to 7

The components except glass fibers and potassium titanate were preliminarily mixed in a tumbler so as to give the composition shown in Table 1, then the obtained preliminary mixture was supplied through a main feeder of a twin-screw extruder (TEM-1008, L/D = 40). In the meantime, the glass fibers and the potassium titanate were supplied through a side feeder of the twin-screw extruder. Then, the preliminary mixture, the glass fibers, and the potassium titanate were melt-kneaded (temperature of main barrel 260°C, discharge rate: 300 kg/hr). The obtained resin composition was discharged into a water bath so as to form a strand. This strand was pelletized by a strand cutter and pellets of the resin composition were thus obtained. The obtained pellets of the resin composition were dried and then evaluated by the methods described above. Table 1 shows the results.

[Table 1]

| blending composition | unit | Example 1 | 2 | 3 | 4 | 5 | 6 | 7 | 8 | 9 | 10 | 11 |
|---|---|---|---|---|---|---|---|---|---|---|---|---|
| (A-1) polybutylene terephthalate resin | mass% | 68.8 | 68.8 | 68.8 | 68.8 | | 50.8 | 40.8 | 60.8 | 69.2 | 66.8 | 64.8 |
| (A-2) polyethylene terephthalate resin | mass% | | | | | 68.8 | | | | | | |
| (B-1) glass fiber (fiber diameter 10.5 μm) | mass% | 30 | 30 | 30 | | 30 | 30 | 40 | 20 | 30 | 30 | 30 |
| (B-2) glass fiber (fiber diameter 6.5 μm) | mass% | | | | 30 | | | | | | | |
| (C-1) potassium titanate (fibrous, fiber diameter 0.5 μm, fiber length 15 μm) | mass% | 1 | | | | | | | | 0.6 | 3 | 5 |
| (C-2) potassium titanate (particulate, particle diameter 1.5 μm) | mass% | | 1 | | 1 | 1 | 1 | 1 | 1 | | | |
| (C-3) potassium titanate (particulate, particle diameter 7 μm) | mass% | | | 1 | | | | | | | | |
| (C') titanium oxide (particulate, particle diameter 0.2 μm) | mass% | | | | | | | | | | | |
| (D-1) non-halogen-based flame retardant | mass% | | | | | | 18 | 18 | 18 | | | |
| (E-1) magnesium stearate | mass% | 0.2 | 0.2 | 0.2 | 0.2 | 0.2 | 0.2 | 0.2 | 0.2 | 0.2 | 0.2 | 0.2 |
| characteristics — bending strength | MPa | 200 | 190 | 185 | 200 | 210 | 180 | 190 | 165 | 200 | 190 | 180 |
| laser marking properties ΔL | - | 20 | 20 | 20 | 20 | 20 | 15 | 15 | 15 | 16 | 25 | 30 |
| UL flammability test (1.6 mmt) | - | HB | HB | HB | HB | HB | V-0 | V-0 | V-0 | HB | HB | HB |

| blending composition | unit | Comparative Example 1 | 2 | 3 | 4 | 5 | 6 | 7 |
|---|---|---|---|---|---|---|---|---|
| (A-1) polybutylene terephthalate resin | mass% | 68.8 | 69.3 | 98.8 | 50.8 | 69.8 | 69.75 | 56.8 |
| (A-2) polyethylene terephthalate resin | mass% | | | | | | | |
| (B-1) glass fiber (fiber diameter 10.5 μm) | mass% | 30 | 30 | | 30 | 30 | 30 | 30 |
| (B-2) glass fiber (fiber diameter 6.5 μm) | mass% | | | | | | | |
| (C-1) potassium titanate (fibrous, fiber diameter 0.5 μm, fiber length 15 μm) | mass% | | | | | | | |
| (C-2) potassium titanate (particulate, particle diameter 1.5 μm) | mass% | | | | | | 0.05 | 13 |
| (C-3) potassium titanate (particulate, particle diameter 7 μm) | mass% | | | | | | | |
| (C') titanium oxide (particulate, particle diameter 0.2 μm) | mass% | 1 | 0.5 | 1 | 1 | | | |
| (D-1) non-halogen-based flame retardant | mass% | | | | 18 | | | |
| (E-1) magnesium stearate | mass% | 0.2 | 0.2 | 0.2 | 0.2 | 0.2 | 0.2 | 0.2 |
| characteristics — bending strength | MPa | 150 | 160 | 85 | 140 | 200 | 200 | 155 |
| laser marking properties ΔL | - | 20 | 18 | 30 | 20 | (measurement impossible) | (measurement impossible) | 20 |
| UL flammability test (1.6 mmt) | - | HB | HB | HB | V-0 | HB | HB | HB |

As is clear from Table 1, Examples 1 to 11 containing a polyester resin, glass fibers, and potassium titanate in the prescribed amount had high bending strength and laser marking with sharp contrast. On the other hand, Comparative Examples 1 to 4 in which the potassium titanate was replaced with titanium oxide had lower bending strength (mechanical characteristic). This tendency was noticeable in Comparative Example 3 having no glass fibers blended therein. Comparative Example 5 having no potassium titanate blended therein and Comparative Example 6 having an excessively small blending amount of potassium titanate had poor laser marking properties (expression of marking). Comparative Example 7 having an excessively large blending amount of potassium titanate not only showed no further improvement in laser marking properties compared to Examples 1 to 8, but also had lower bending strength (mechanical characteristic).

Examples 6 to 8 had a non-halogen-based flame retardant blended therein, but still maintained high bending strength (mechanical characteristic) in the same level as Examples 1 to 5 and 9 to 11 having no non-halogen-based flame retardant blended therein. On the other hand, Comparative Example 4 had the identical blending with Example 6 except for the use of titanium oxide instead of potassium titanate, but had noticeably lower bending strength (mechanical characteristic).

Industrial Applicability

The polyester resin composition of the present invention has high strength and high rigidity, but still can give, by laser marking, a character, a symbol, and the like with sharp contrast, and are therefore applicable to a wide range of applications such as an electrical or electronic part, a mechanical part, and an automobile part.

**Claims**

1.   A resin composition for laser marking which contains 20 to 80 mass% of a polyester resin (A), 10 to 50 mass% of glass fibers (B), and 0.1 to 10 mass% of potassium titanate (C).

2.   The resin composition for laser marking according to claim 1, wherein the potassium titanate (C) is fibrous potassium titanate.

3.   The resin composition for laser marking according to claim 1 or 2, wherein the resin composition for laser marking further contains 1 to 30 mass% of a non-halogen-based flame retardant (D), and has a bending strength of 165 MPa or more.

4.   The resin composition for laser marking according to claim 1 or 2, wherein the polyester resin (A) is polybutylene terephthalate or polyethylene terephthalate.

## INTERNATIONAL SEARCH REPORT

| International application No. |
| --- |
| **PCT/JP2023/030730** |

| | |
| --- | --- |
| **A. CLASSIFICATION OF SUBJECT MATTER** | |
| ***C08L 67/02***(2006.01)i; ***C08K 3/20***(2006.01)i; ***C08K 7/14***(2006.01)i<br>FI:  C08L67/02; C08K7/14; C08K3/20 | |
| According to International Patent Classification (IPC) or to both national classification and IPC | |

**B. FIELDS SEARCHED**

Minimum documentation searched (classification system followed by classification symbols)

C08L67/02; C08K3/20; C08K7/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 5-042760 A (POLYPLASTICS CO., LTD.) 23 February 1993 (1993-02-23)<br>    claims, paragraph [0008], examples | 1-4 |
| X | CN 115011091 A (HANGZHOU DEHONG TECHNOLOGY CO., LTD.) 06 September 2022 (2022-09-06)<br>    claims, examples | 1-4 |
| A | JP 6502932 B2 (MERCK PATENT GMBH) 17 April 2019 (2019-04-17)<br>    entire text | 1-4 |

| | |
| --- | --- |
| ☐ Further documents are listed in the continuation of Box C. | ☑ See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 October 2023** | **07 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/030730**

| Patent document cited in search report | | | Publication date (day/month/year) | Patent family member(s) | | | Publication date (day/month/year) |
|---|---|---|---|---|---|---|---|
| JP | 5-042760 | A | 23 February 1993 | (Family: none) | | | |
| CN | 115011091 | A | 06 September 2022 | (Family: none) | | | |
| JP | 6502932 | B2 | 17 April 2019 | US | 2016/0145421 | A1 | |
| | | | | entire text | | | |
| | | | | EP | 3013468 | A1 | |
| | | | | DE | 102013010703 | A | |
| | | | | TW | 201524594 | A | |
| | | | | CN | 105339080 | A | |
| | | | | KR | 10-2016-0024988 | A | |
| | | | | WO | 2014/206523 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007098939 A

- JP 11001065 A